# EUROPEAN PATENT SPECIFICATION

(11) **EP 2 096 345 B1**
(45) Date of publication and mention of the grant of the patent: **28.12.2016**
(21) Application number: 07832469.6
(22) Date of filing: 26.11.2007
(51) Int. Cl.: F16K 31/66, F24D 3/10, G05D 23/19

(54) **CONTROL METHOD FOR THERMAL VALVE**
STEUERVERFAHREN FÜR THERMOVENTIL
PROCÉDÉ DE COMMANDE POUR UNE SOUPAPE THERMIQUE

(30) Priority: 28.11.2006 JP 2006319669
(43) Date of publication of application: 02.09.2009
(73) Proprietor: DAIKIN INDUSTRIES, LTD., Osaka-shi, Osaka 530-8323 (JP)
(72) Inventor: YOSHIKAWA, Shinji, Kusatsu-shi Shiga 525-8526 (JP); HIROSE, Junichi, Kusatsu-shi Shiga 525-8526 (JP); YABUKI, Toshio, Kusatsu-shi Shiga 525-8526 (JP)
(74) Representative: Goddar, Heinz J.
(86) International application number: PCT/JP2007/072744
(87) International publication number: WO 2008/065987

(56) References cited:
- JP-A- 61 041 085
- JP-A- 63 106 484
- JP-A- 63 106 484
- JP-A- 2001 154 738
- JP-A- 2001 336 811
- JP-A- 2001 336 811
- JP-A- 2004 212 260

## Description

### TECHNICAL FIELD

The present invention relates to a thermal valve that is suitable for use in temperature control devices in which temperature-controlled water is circulated and supplied to a temperature controller such as a floor temperature control panel, and in particular to a method for controlling a thermal valve, wherein the peak current flowing when the valve is open can be lowered.

### BACKGROUND ART

There are conventionally known heat pump-type floor heating devices configured in such a way that a hot water unit having a water heat exchanger, circulation pump, and the like is connected by piping to a floor heating panel that is temperature-adjustable by means of hot water, and the heat exchange between the hot water in the water circulation pathway and the refrigerant flowing through the refrigerant circuit is accomplished by the water heat exchanger (see, for example, document JP 2000-18671 A and document JP 2000-28182 A). In such a heat
pump-type floor heating device, an outdoor heat exchanger functions as an evaporator on the heat source side, and the water heat exchanger on the service side functions as a condenser, thereby allowing floors to be heated through the supply of hot water to the floor heating panel. In the above-mentioned type of floor heating devices, thermal valves are provided as on-off valves in each water circulation pathway when adopting a configuration in which a plurality of floor heating panels are provided in rows to form a plurality of water circulation pathways, and hot water is supplied independently to each water circulation pathway by a single pump. The thermal valve 10 has a structure shown in FIG 5, as also disclosed in document JP 2002-195583 A. In the thermal valve 10, an inlet channel 12 and outlet channel 13 are
provided inside a valve main body 11, and a valve element 14 for opening and closing the two channels 12 and 13 is disposed so as to be able to slide in the axial direction. A bellows 15 filled with wax is disposed near the top end of the valve element 14, and the interior of the bellows 15 can be heated by an electrical heater (PTC heater (barium titanate-based ceramic heater)) 16. That is, power is supplied to the electrical heater 16, causing the wax to expand, and the bellows 15 thereby expands, allowing the valve element 14 to move in the valve-opening

direction. The valve element 14 is also urged in the valve-closing direction by a spring 17, and the valve element 14 opens the valve against the force of the spring 17 due to the expansion of the bellows 15. Thermal valves having such a structure are compact, yet provide relatively substantial driving force, and are therefore commonly used as a suitable component in water circuits.

Document JP 2001-336811 A discloses a control system for driving a temperature control device comprising a water circulation route connecting a pump and a heating panel.

Document JP S63-106484 A discloses a driving system for a solenoid valve having an on-offset means for starting the system.

### DISCLOSURE OF THE INVENTION

### Technical Problem:

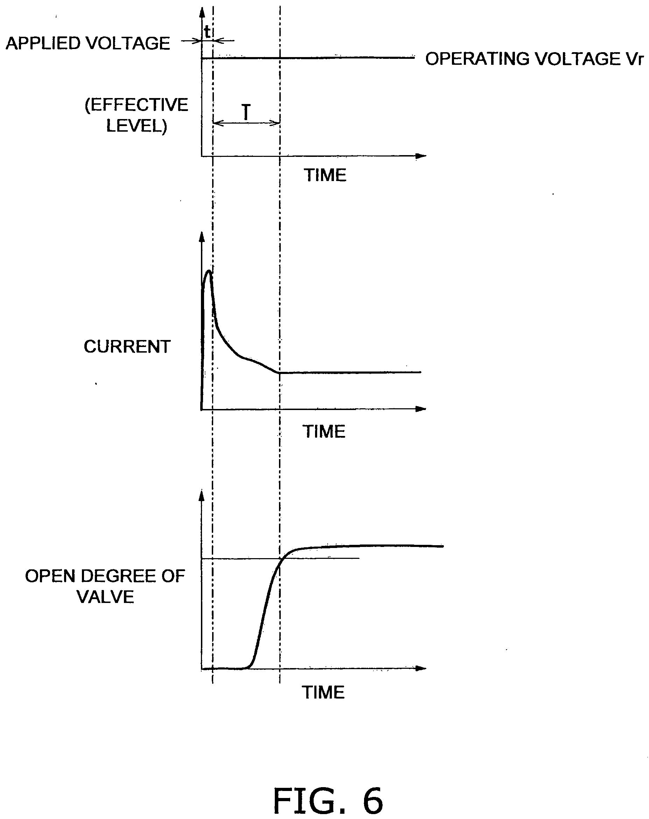

As noted above, the thermal valve has a mechanism whereby the wax is heated and caused to expand by the electrical heater 16 to provide a valve opening action. The valve-opening action of the thermal valve therefore requires relatively large amounts of current. Particularly when a PTC heater is used as the heater 16 a substantial rush current is needed, as shown in FIG 6 because PTC heater have low electrical resistance at ordinary temperatures. A large-capacity electrical component must therefore be attached around the PTC heater, and measures against noise must also be taken.

An object of the present invention, which is intended to overcome the above mentioned drawbacks, is to provide a method for controlling a thermal valve which eliminates the need for substantial rush current as mentioned above and can thus be inexpensively configured and more reliably operated.

### Solution to Problem:

The invention is defined by independent claim 1.

A method for controlling a thermal valve according to a first aspect of the present invention is a method for controlling a thermal valve opened by the application of a designated operating voltage, comprising a first step and a second step. In the first step, a first voltage that is lower than the operating voltage is applied to the thermal valve as an applied voltage when the thermal valve starts to open. In the second step, the applied voltage is increased toward the level of the operating voltage after the first step.

A method for controlling a thermal valve according to a second aspect of the present invention is the method for controlling the thermal valve according to the first aspect of the present invention, wherein, in the first step, the first voltage continues to be output as the applied voltage for a designated period of time from the time the thermal valve starts to open.

A method for controlling a thermal valve according to a third aspect of the present invention is the method for controlling the thermal valve according to the second aspect of the present invention, wherein the designated period of time is longer than a time needed for a current flowing through the thermal valve to reach a maximum value when the operating voltage is applied as the applied voltage to the thermal valve from the time the thermal valve starts to open.

A method for controlling a thermal valve according to a fourth aspect of the present invention is the method for controlling the thermal valve according to the first aspect of the present invention, wherein, in the first step, the first voltage (Va) is continuously variable.

A method for controlling a thermal valve according to a fifth aspect of the present invention, however not independently claimed, is the method for controlling the thermal valve according to any of the first through fourth aspects of the present invention, wherein, in the second step, the applied voltage is
increased to a second voltage that is higher than the operating voltage.

A method for controlling a thermal valve according to a sixth aspect of the present invention is the method for controlling the thermal valve according to any of the first through fifth aspects of the present invention, wherein the applied voltage is reduced below the operating voltage in a state in which the thermal valve is completely open.

### Advantageous Effects of Invention:

The method for controlling the thermal valve according to the first through third aspects allows the rush current to be lower than in the past. A smaller-capacity electrical component attached around the PTC heater can thus be used, and simpler measures against noise can be taken.

The method for controlling the thermal valve according to the fourth aspect enables smooth operation of thermal valve in addition to the effects mentioned above.

The method for controlling the thermal valve according to the fifth aspect allows the valve-opening speed to be increased.

The method for controlling the thermal valve according to the sixth aspect allows power consumption to be conserved while the thermal valve is completely open.

### BRIEF DESCRIPTION OF THE DRAWINGS

FIG 1 is a circuit diagram showing an example of a control mechanism suitable for use in the method for controlling the thermal valve according to the present invention.
FIG 2 is a time chart showing a first embodiment of the method for controlling the thermal valve according to the present invention.
FIG 3 is a time chart showing a second embodiment of the method for controlling the thermal valve according to the present invention.
FIG 4 is a time chart showing a third embodiment of the method for controlling the thermal valve according to the present invention.

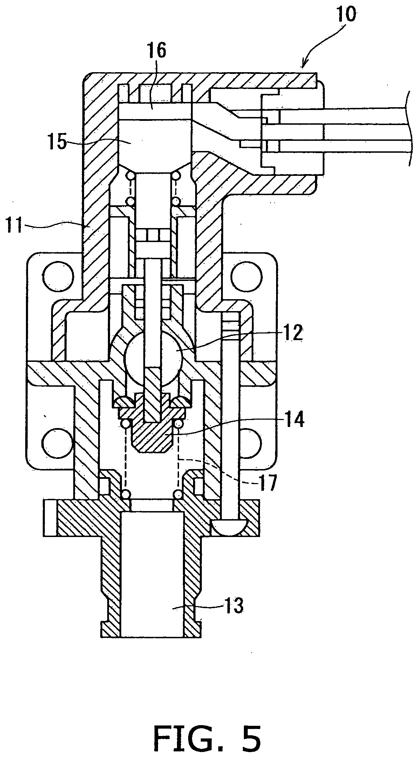

FIG 5 is a cross sectional view of the thermal valve.
FIG 6 is a time chart for a conventional method for controlling the thermal valve.

### EXPLANATION OF THE REFERENCE NUMERALS

1: voltage regulator
2: controller
10: thermal valve

### BEST MODE FOR CARRYING OUT THE INVENTION

The method for controlling the thermal valve according to the present invention is described in detail below with reference to the drawings regarding specific embodiments.

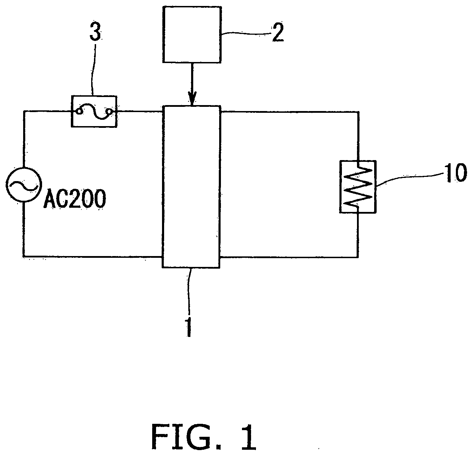

FIG 1 is a circuit diagram showing an example of a control mechanism suitable for use in the method for controlling the thermal valve. First, in FIG. 1, the numeral 10 indicates the same thermal valve as mentioned above, and the thermal valve is equipped with a PTC heater. The numeral 1 is a voltage regulator, and a voltage output from the voltage regulator 1 is applied to the thermal valve 10. The numeral 2 indicates a controller, which is used to control the voltage output from the voltage regulator 1. The numeral 3 indicates a fuse.

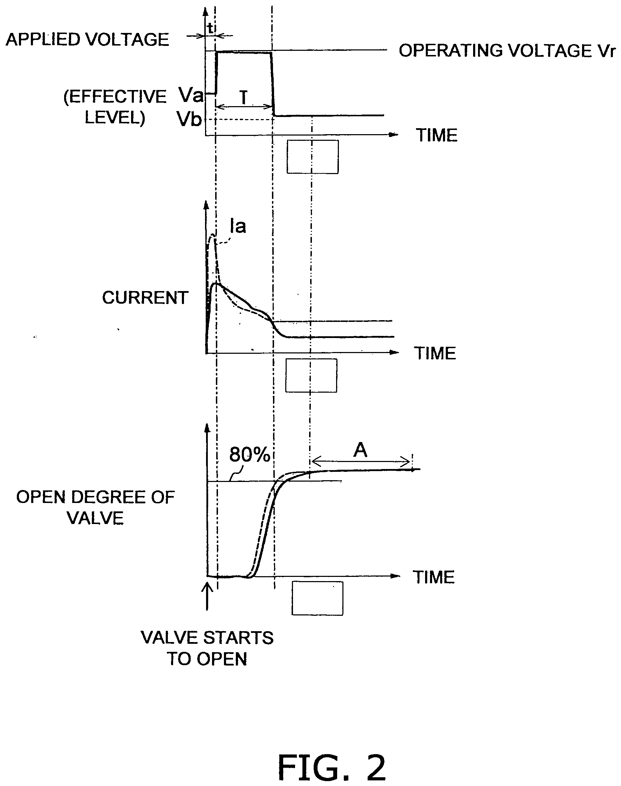

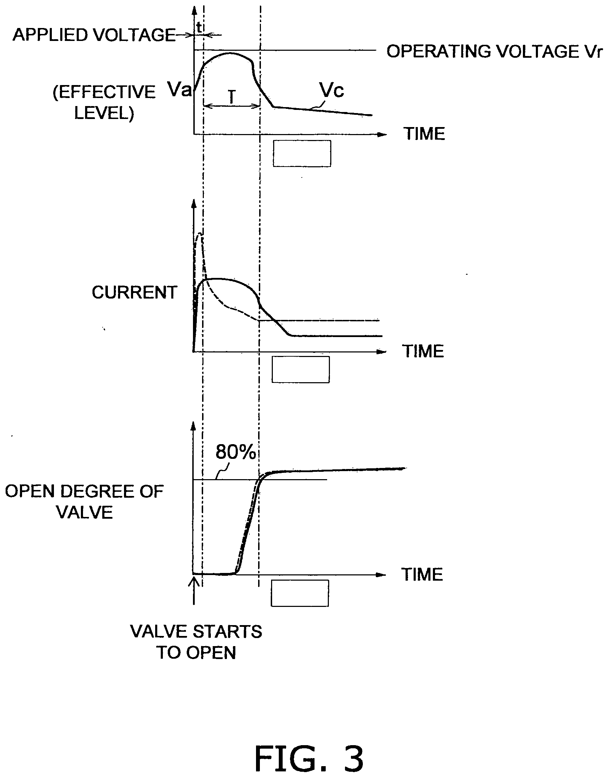

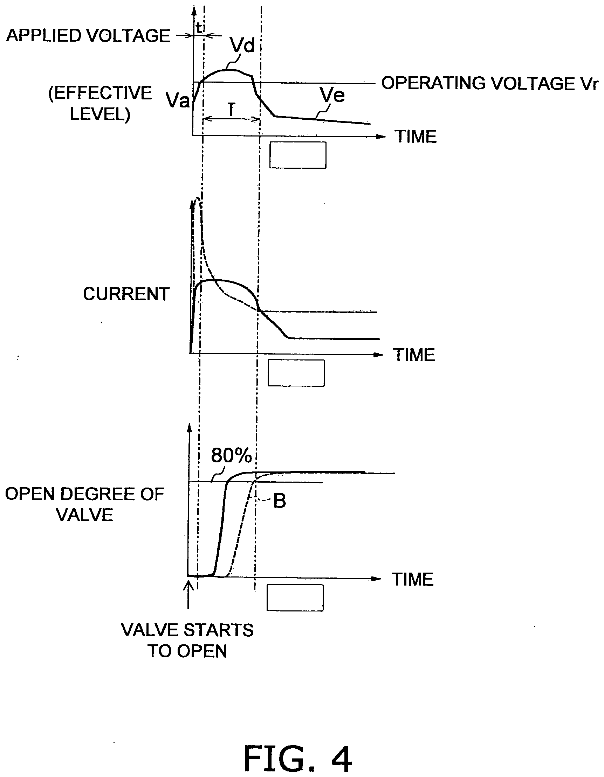

A method for controlling the thermal valve 10 according to a first embodiment of the present invention will now be described. In this control method, as shown in FIG 2, initially (that is, when the thermal valve 10 begins to open), the voltage regulator 1 applies a voltage Va (corresponding to a first voltage) that is lower than a operating voltage Vr (rated voltage) to the thermal valve 10 as an applied voltage for a designated time t (initial rise time) (corresponding to a first step). Then, after the designated time t has passed, the voltage regulator 1 increases the voltage applied to the thermal valve 10 up to the operating voltage Vr (corresponding to a second step). After a fixed period of time T has passed following the passage of the designated period of time t, the voltage regulator 1 lowers the voltage applied to the thermal valve 10 to a fixed voltage Vb that is lower than the operating voltage Vr. The "designated period of time t," which is the period of time for which the above-mentioned voltage Va continues to be applied to the thermal valve 10 as the applied voltage, is preferably somewhat longer than a time needed for the current flowing through the thermal valve 10 (that is, a rush current: a current Ia represented by the dashed line in FIG 2) to reach a maximum value (that is, a peak current), assuming that the operating voltage Vr is applied to the thermal valve 10 from the beginning (that is, a time when the thermal valve 10 starts to open)(See Fig.6). Specifically, the designated period of time t is set about 0.5 to 2 seconds, and more preferably about 1 second. In addition, the "fixed period of time T" (a time when the thermal valve 10 is substantially open), which is a period of time for which the operating voltage Vr continues to be applied as the applied voltage to the thermal valve 10, is set a time at which the thermal valve 10 is can obtain about 80% open degree, since the thermal valve 10 can adequately function as a valve when the valve open degree of the thermal valve 10 is about 80%. The designated period of time t and fixed period of time T are set by a timer (not shown). A flow meter can also be used instead of the timer to set the times. In such a case, the flow meter will detect the state that the flow rate is obtained in which the open degree of the thermal valve 10 is about 80%, and the voltage regulator 1 will lower the voltage applied to the thermal valve 10 based on the detected results. In FIG 2 (same in FIG. 3 and 4), the dashed line shows the state controlled by a conventional method compared to the above-mentioned method for controlling the thermal valve 10 in the first embodiment.

The above-mentioned method of control allows the rush current (the peak current) to be kept lower while the thermal valve 10 is open. A smaller-capacity electrical components such as wiring or a connector used around the thermal valve 10 can thus be used, and measures against noise can also be taken. In such cases, a control structure is simpler, and manufacturing costs can be reduced. It is also possible to adequately ensure that the device operates in a reliable manner. Also, while the thermal valve 10 is completely open, the voltage regulator 1 lowers the applied voltage to the thermal valve 10 (period A in FIG 2), thus allowing power consumption to be conserved while the thermal valve 10 is completely open. The voltage Vb needed to keep the thermal valve 10 completely open may be experimentally determined in advance and stored in the controller 2. The voltage Va applied to the thermal valve 10 when the thermal valve 10 starts to open, as well as the designated periods of time t and T, are similarly stored in the controller 2.

FIG 3 shows a second embodiment of the method for controlling the thermal valve 10 according to the present invention. FIG 3 shows a method for the continuous fine-tuned control of the voltage applied to the thermal valve 10 when the voltage to the thermal valve 10 is controlled in the same manner as in the above-mentioned embodiment shown in FIG 2. In this case, the voltage regulator 1 applies the voltage Va that is lower than the operating voltage Vr as the applied voltage to the thermal valve 10, and then gradually increases the applied voltage to around the operating voltage Vr. The voltage regulator 1 then gradually lowers the voltage currently applied to the thermal valve 10. In this case as well, while the thermal valve 10 is completely open (after the designated period of time T has passed in the above-mentioned embodiment), the voltage regulator 1 applies a voltage Vc (a voltage needed to keep the valve open) that is even lower than the operating voltage Vr as the applied voltage.

The same action and effect as above-mentioned are obtained in this embodiment as well, but an advantage in this case is furthermore that the thermal valve 10 can be smoothly operated.

FIG 4 shows a third embodiment of the method for controlling the thermal valve 10 according to the present invention. In this embodiment, the voltage regulator 1 applies a voltage that is higher than the operating voltage Vr as the applied voltage to the thermal valve 10 during the designated period of time T (the time when the valve is substantially open) in the first embodiment. This is to increase the speed at which the thermal valve 10 opens. It is thus possible to open the thermal valve 10 sooner than in the past (shown in graph B by the dashed line regarding open degree of the valve in FIG. 4), as shown in FIG 4. This can be achieved using the thermal valve 10 in which the operating voltage Vr (the rated voltage) is lower than the applied voltage that can be output from the voltage regulator 1. In this case, the voltage regulator 1 applies the voltage Va that is lower than the operating voltage Vr as the applied voltage to the thermal valve 10 during the designated period of time t after the thermal valve 10 opens, and then applies a voltage Vd (corresponding to a second voltage) that is higher than the operating voltage Vr as the applied voltage to the thermal valve 10 during the designated period of time T. The voltage regulator 1 then also applies a voltage Ve that is lower than the operating voltage Vr as the applied voltage to the thermal valve 10.

In addition to methods for controlling the effective level of voltage by phase control using semiconductors, PWM or PAM control using an inverter can also be used as the method for controlling the voltage in the voltage regulator 1 according to each of the above-mentioned embodiments. A method for conserving power consumption using the thermal valve 10 as a heat-insulated structure can also be used in the each of the above-mentioned embodiments. In the case, examples of the heat-insulated structures include structures in which a portion around a heater 16 of the thermal valve 10, or part or all of a valve main body 11, is formed with foamed resin and double-resin structure.

## Claims

1. A method for controlling a thermal valve (10) heated by an electrical heater (16) operated by applying an operating voltage (Vr), comprising:
a first step of applying a first voltage (Va), that is lower than the operating voltage (Vr), to the valve (10), to cause the valve to start to open, and
a second step of subsequently increasing the applied voltage toward the level of the designated operating voltage (Vr),
**characterized in that**
in the first step, the applied first voltage (Va) continues to be the output as the applied voltage for a designated period of time (t) from the time the thermal valve starts to open, and
the designated period of time is longer than the time which would be needed for a current flowing through the thermal valve (10) to reach a maximum value if the designated operating voltage (Vr) were to be applied as the applied voltage to the thermal valve (10) to cause the thermal valve (10) to open.

2. The method for controlling the thermal valve according to claim 1, wherein, in the first step, the first voltage (Va) is continuously variable.

3. The method according to any of claims 1 or 2, wherein the applied voltage is subsequently reduced below the operating voltage when the thermal valve (10) is completely open.

4. The method according to claim 2, wherein a PCT heater is used as electrical heater (16).

5. The method according to claim 3, wherein the thermal valve (10) is opened by heating and expanding wax.

## Patentansprüche

1. Verfahren zum Steuern eines Thermoventils (10), das durch ein elektrische Heizung (16) erwärmt wird, die durch Anlegen einer Betriebsspannung (Vr) betrieben wird, mit:
- einem ersten Schritt, eine erste Spannung (Va) an dem Thermoventil (10) anzulegen, die niedriger als die Betriebsspannung (Vr) ist, um zu bewirken, dass sich das Ventil zu öffnen beginnt, und
- einem zweiten Schritt, nachfolgend die angelegte Spannung in Richtung der Höhe der bestimmten Betriebsspannung (Vr) zu erhöhen,
**dadurch gekennzeichnet, dass**
- im ersten Schritt, die angelegte erste Spannung (Va) weiterhin die Ausgabe als Betriebsspannung für eine bestimmte Zeit (t) ab dem Zeitpunkt ist, ab dem sich das Thermoventil zu öffnen beginnt, und
- die bestimmte Zeit nicht länger als die Zeit ist, die für einen durch das Thermoventil (10) fließenden Strom benötigt würde, um den maximalen Wert zu erreichen, wenn die bestimmte Betriebsspannung (Vr) als an dem Thermoventil (10) angelegte Spannung angelegt würde, um zu veranlassen, dass sich das Thermoventil (10) öffnet.

2. Verfahren zum Steuern des Thermoventils nach Anspruch 1, wobei die erste Spannung (Va) im ersten Schritt kontinuierlich variabel ist.

3. Verfahren nach einem der der Ansprüche 1 und 2, wobei die angelegte Spannung nachfolgend unterhalb der Betriebsspannung verringert wird, wenn das Thermoventil (10) vollständig offen ist.

4. Verfahren nach Anspruch 2, wobei eine PCT-Heizung als elektrische Heizung (16) verwendet wird.

5. Verfahren nach Anspruch 3, wobei das Thermoventil (10) durch Erwärmen und sich expandierendes Wachs geöffnet wird.

## Revendications

1. Méthode de régulation d'une soupape thermique (10) chauffée par un appareil de chauffage électrique (16) commandé par l'application d'une tension de service (Vr), comprenant :
une première étape d'application d'une première tension (Va), inférieure à la tension de service (Vr), à la soupape (10), de sorte que la soupape commence à s'ouvrir, et
une deuxième étape d'augmentation par la suite de la tension appliquée vers le niveau de la tension de service (Vr) désignée,
**caractérisée en ce que**
dans la première étape, la première tension (Va) appliquée reste la sortie en tant que tension appliquée pendant une période désignée (t) à partir du moment où la soupape thermique commence à s'ouvrir, et
la période désignée est plus longue que le temps qui serait nécessaire pour qu'un courant circulant à travers la soupape thermique (10) atteigne une valeur maximum si la tension de service (Vr) était appliquée comme tension appliquée à la soupape thermique (10) pour causer l'ouverture de la soupape thermique (10).

2. Méthode de régulation de la soupape thermique selon la revendication 1, dans laquelle, dans la première étape, la première tension (Va) est variable en continu.

3. Méthode selon une quelconque des revendications 1 ou 2, la tension appliquée étant ultérieurement réduite à un niveau inférieur à la tension de service lorsque la soupape thermique (10) est entièrement ouverte.

4. Méthode selon la revendication 2, l'appareil de chauffage électrique (16) utilisé étant un appareil de chauffage à coefficient de température positif.

5. Méthode selon la revendication 3, la soupape thermique (10) étant ouverte par le chauffage et la dilatation d'une cire.
